# EUROPÄISCHE PATENTSCHRIFT

(11) **EP 2 368 766 B1**
(45) Veröffentlichungstag und Bekanntmachung des Hinweises auf die Patenterteilung: **10.10.2012**
(21) Anmeldenummer: 11159216.8
(22) Anmeldetag: 22.03.2011
(51) Int. Cl.: B60R 9/06

(54) **Transportbox**
Transport box
Caisse de transport

(30) Priorität: 25.03.2010 DE 102010012772
(43) Veröffentlichungstag der Anmeldung: 28.09.2011
(73) Patentinhaber: mft transport systems GmbH, 74532 IIshofen-Großallmerspann (DE)
(72) Erfinder: Bohn, Peter, 74532, Ilshofen (DE)
(74) Vertreter: Winter, Brandl, Fürniss, Hübner, Röss, Kaiser, Polte - Partnerschaft

(56) Entgegenhaltungen:
- EP-A1- 0 079 395
- AU-B2- 667 191
- DE-A1- 2 253 024
- DE-A1- 19 855 776
- US-A- 1 849 046
- US-A- 5 799 848

## Beschreibung

Die vorliegende Erfindung betrifft eine Transportbox für Kraftfahrzeuge zur Montage auf einem Fahrzeugdachträger und/oder einem kupplungsgebundenen Hecktragesystem (Heckträger) und insbesondere eine Transportbox mit den Merkmalen gemäß dem Oberbegriff des Patentanspruchs 1.

Aus dem Stand der Technik sind Transportboxen dieser Gattung bekannt bestehend aus einem Transportgut-Aufnahmekörper und einem Deckel zum Öffnen/Schließen des Aufnahmekörpers. Der in der Regel wannenförmige Aufnahmekörper ist an seiner Unterseite bzw. seinem Körperboden mit Befestigungs-/Montagemitteln versehen, um beispielsweise an einem Fahrzeugdachträger oder einem Heckträger lösbar befestigt werden zu können. Der Deckel ist an einer Längsseite schwenkbar am Aufnahmekörper anscharniert und häufig über eine Feder-/Dämpfereinrichtung am Aufnahmekörper abgestützt, um den Öffnungsvorgang zu erleichtern und den Deckel selbständig in Offenposition zu halten.

Für gewöhnlich haben Transportboxen in der Ausführung einer Dachbox eine längliche sowie flache Außenkontur, zum Einen, um den Luftwiderstand in Fahrtrichtung zu verringern und zum Anderen, um auch sperrige Gegenständer wie beispielsweise Ski, Stöcke und dergleichen darin verstauen zu können. Transportboxen zur Montage an bekannten Hecktragesystemen sind hingegen im wesentlichen kistenförmig, nahezu in Form eines Würfels ausgebildet, um einen möglichst großen, nutzbaren Stauraum zuschaffen. Da ein solches Hecktragesystem normaler Weise auf einer Anhängerkupplung eines Kraftfahrzeugs am Fahrzeugheck montiert wird, ist die kistenförmige Transportbox von der Fahrzeugkontur in Fahrtrichtung strömungsgünstig abgeschirmt (sie befindet sich also im Wesentlichen im Windschatten des Fahrzeugs), sodass bei deren Ausgestaltung keine Rücksicht auf deren Strömungseigenschaften genommen werden muss.

Indessen werden Transportboxen für Hecktragesysteme notwendiger Weise quer zur Fahrtrichtung am Fahrzeugheck montiert, sodass deren maximale Länge nicht oder nur geringfügig die Fahrzeugbreite überschreiten sollte, um den Strömungswiderstand nicht unnötig ansteigen zu lassen. Dies wiederum hat jedoch den Nachteil, dass keine sperrigen Gegenstände gemäß vorstehender Definition wie beispielsweise Ski darin verstaut werden können.

Aus der US 1,849,046 ist eine Transportbox dieser Gattung putspupchend den oberbessyriff des patent ousptuchs bekannt. Diese Box hat teleskopförmig ausziehbare Längs-Endabschnitte, um das Boxvolumen zu verändern. Ein solcher Teleskopmechanismus hat jedoch eine Mehrzahl von Nachteilen. Er ist hinsichtlich seiner Konstruktion kompliziert und aufwändig. Der Mechanismus verbraucht Bauraum innerhalb der Box und verkleinert deren Stauvolumen. Er ist sicherlich auch störanfällig insbesondere bei Feuchtigkeits- und Kälteeinwirkung. Schließlich sind die Teleskopbauteile kantig, ggf. gefettet und daher gefährlich für das Transportgut, normalerweise bestehend aus Textilien und dergleichen Kleidungsstücke.

Aus diesem Grund sieht beispielsweise die US 5,799,848 den Schiebemechanismus für die Teleskopverbindung von Dachboxenteilen außerhalb des Boxvolumens vor und umgibt diesen mit einem zusätzlichen Gehäuse. Abgesehen davon, dass nach Auffassung der Anmelderin hierunter das Erscheinungsbild der Dachbox leidet, besteht auch hier das Problem der Verschmutzungsgefahr eines Bedieners, der sich zumindest beim Beladen der Box an dieser ggf. anlehnt.

In der Druckschrift EP 0 079 395 ist ein Koffer mit Rahmenelement offenbart, dessen Stauraum variiert werden kann, indem Seitenwände / Seitenelemente mit unterschiedlichen Tiefen an das Rahmenelement montiert werden. Ferner ist der Koffer gemäß der Druckschrift EP 0 079 395 so gestaltet, dass die Seitenelemente öffen- und schließbar sind und somit die eigentlichen Zugangsdeckel ausbilden.

Des Weiteren ist in der Druckschrift DE 2 253 024 ein Gepäckstück oder Koffer zum Befestigen an der Außenseite von Automobilen offenbart. Dabei wird der tragbare sowie über einen längsseits anscharnierten Deckel wasserdicht verschließbaren Koffer ohne Verwendung eines Gestells direkt an einem Wagendach oder auf dem Deckel eines Kofferraums durch Gurte befestigt.

Angesichts dessen ist es die Aufgabe der vorliegenden Erfindung, eine Kraftfahrzeug-Transportbox bereit zu stellen, deren Boxenlänge veränderbar ist, die jedoch einen möglichst einfachen Aufbau hat und eine sichere Handhabung gewährleistet.

Diese Aufgabe sowie die Ziele der Erfindung werden durch eine Transportbox mit den Merkmalen des Patentanspruchs 1 gelöst. Vorteilhafte Ausgestaltungen der Erfindung sind Gegenstand der Unteransprüche.

Demzufolge wird eine Transportbox zur Montage an einem Kraftfahrzeug vorzugsweise an einem Hecktragesystem des Kraftfahrzeugs vorgeschlagen, mit einem Transportgut-Aufnahmekörper, der an zumindest einer (vorzugsweise oberen) Seite mit einem Deckel geöffnet und geschlossen werden kann. Erfindungsgemäß ist zumindest eine Stirnseite (jene Seite, die senkrecht zur Deckelseite bzw. zur Deckelscharnierachse verläuft) des Aufnahmekörpers offen bzw. mit einer Öffnung versehen und wird durch eine externe Kappe verschlossen, deren Seitenendplatte (Kappenboden) in Stirnseitenrichtung des Aufnahmekörpers auf unterschiedliche Abstände zum Aufnahmekörper wählbar bzw. einstellbar ist. Hierdurch wird es möglich, zumindest den Aufnahmekörper (ohne den Deckel) in seiner Längsrichtung zu vergrößern. Vorzugsweise kann eine entsprechende Konstruktion auch auf der anderen (gegenüberliegenden) Stirnseite des Aufnahmekörpers vorgesehen sein, sodass eine symmetrische Vergrößerung/Verkleinerung des Aufnahmekörpers erreicht werden kann. Des Weiteren lässt sich der Aufnahmekörper nunmehr individuell an das zu transportierende Gut anpassen und nur auf eine solche Länge einstellen, die für das Transportgut gerade noch ausreichend ist. Somit kann der durch die Transportbox erzeugte Luftwiderstand auch im Fall eines Quereinbaus an einem Hecktragesystem in Abhängigkeit des Transportguts jeweils auf ein Minimum reduziert werden. Zur Verriegelung der Kappe (n) wird einfach der Deckel geschlossen.

An dieser Stelle sei zum besseren Verständnis des Erfindungsgegenstands der Aufbau eines Hecktragesystems grundsätzlich beschrieben, auf dem die erfindungsgemäße Transportbox montierbar ist.

Demzufolge hat das Hecktragesystem in der Regel zwei zusammenpressbare Kugelkalottenschalen, die mit dem heckseitigen Kupplungsknauf eines Kraftfahrzeugs in Reibschluss bringbar sind. Alternativ kann aber auch eine auf das jeweilige Fahrzeug individuell abgestimmte Befestigungseinrichtung vorgesehen sein.

Im Fall der individuellen Befestigung an der Anhängerkupplung sind die Kugelkalottenschalen an einem gitterförmigen Basisrahmen angeordnet, der im montierten Zustand des Heckträgers an der Fahrzeug-Anhängerkupplung eine im Wesentlichen horizontale Auflagerfläche bildet, die sich hinter dem Fahrzeug von diesem weg erstreckt. An dem Basisrahmen sind Montageelemente angeordnet, die mit Befestigungsmitteln an der erfindungsgemäßen Transportbox in Eingriff bringbar sind, um die Box sicher auf dem Basisrahmen zu halten.

Wie vorstehend bereits ausgeführt wurde, ist die Transportbox im Falle der Heckmontage in Fahrzeugquerrichtung angeordnet, wobei die zumindest eine Endkappe (vorzugsweise zwei Endkappen) je nach Ausziehmaß seitlich über das Fahrzeug vorragt. Da jedoch die erfindungsgemäße Transportbox hinsichtlich ihrer wirksamen Länge variierbar ist, kann das Überstandsmaß der Transportbox auf ein Minimum beschränkt und damit der Luftwiderstand bei der Fahrt reduziert werden. Gemäß der Erfindung ist an der offenen Stirnseite des Aufnahmekörpers ein Befestigungsmittel zur lösbaren Befestigung/Fixierung/Verankerung der Kappe zum Verschließen der Stirnseite ausgebildet. Der Grundgedanke für diese Ausgestaltung besteht darin, die Kappe nicht ausfahrbar sondern auswechselbar zu halten, um auf diese Weise Kappen mit unterschiedlicher Kappentiefe in der seitlichen Öffnung des Aufnahmekörpers in ausgewählter Weise zu montieren. Demzufolge ist es vorzugsweise vorgesehen, dass das Befestigungsmittel in Form einer um die offene Stirnseite bzw. die Stirnseitenöffnung sich erstreckenden Nut und die Kappe mit einem umlaufenden Kragen ausgebildet ist, der in die Nut vorzugsweise dichtend einsteckbar ist. Die Nut ist dabei quer zur Längsachse des Aufnahmekörpers ausgerichtet, sodass die Kappe nur bei geöffnetem Deckel in die Nut (von oben) eingesetzt werden und bei geschlossenem Deckel durch diesen nicht mehr herausrutschen kann. Der Austausch der Kappen lässt sich somit schnell ohne Zuhilfenahme von Werkzeug nach Art eines Riegels oder einer Schiebeklappe durchführen, wobei die Kappe vorzugsweise mit Schließen des Deckels verriegelt wird.

Die Erfindung wird nachstehend anhand bevorzugter Ausführungsbeispiele unter Bezugnahme auf die begleitenden Figuren näher erläutert.
Fig. 1 zeigt eine Transportbox in Explosionsdarstellung mit teleskopförmig ausfahrbaren oder versetzbaren Stirnkappen gemäß einem ersten bevorzugten Ausführungsbeispiel der Erfindung,
Fig. 2 zeigt die Transportbox aus Fig. 1 zur Demonstration des Längeneinstellvorgangs,
Fig. 3 zeigt die Transportbox aus Fig. 1 in eingefahrenem Einstellzustand,
Fig. 4 zeigt die Transportbox aus Fig. 1 in ausgefahrenem Einstellzustand,
Fig. 5 zeigt eine Transportbox mit austauschbaren Stirnkappen unterschiedlicher Kappentiefen gemäß einem zweiten bevorzugten Ausführungsbeispiel der Erfindung,
Fig. 6 zeigt ein Grundgestell eines erfindungsgemäßen Fahrzeughecktragesystems gemäß einer ersten bevorzugten Ausführungsform als eine Individuallösung, auf der die erfindungsgemäße Transportbox vorzugsweise montierbar ist,
Fig. 7 zeigt ein Grundgestell des Fahrzeughecktragesystems für die erfindungsgemäße Transportbox nach einem zweiten bevorzugten Ausführungsbeispiel als eine Universallösung und
Fig. 8 zeigt ein Transportgut-Auflager gemäß einem dritten bevorzugten Ausführungsbeispiel in Form der erfindungsgemäßen Transport- oder Gepäckbox.

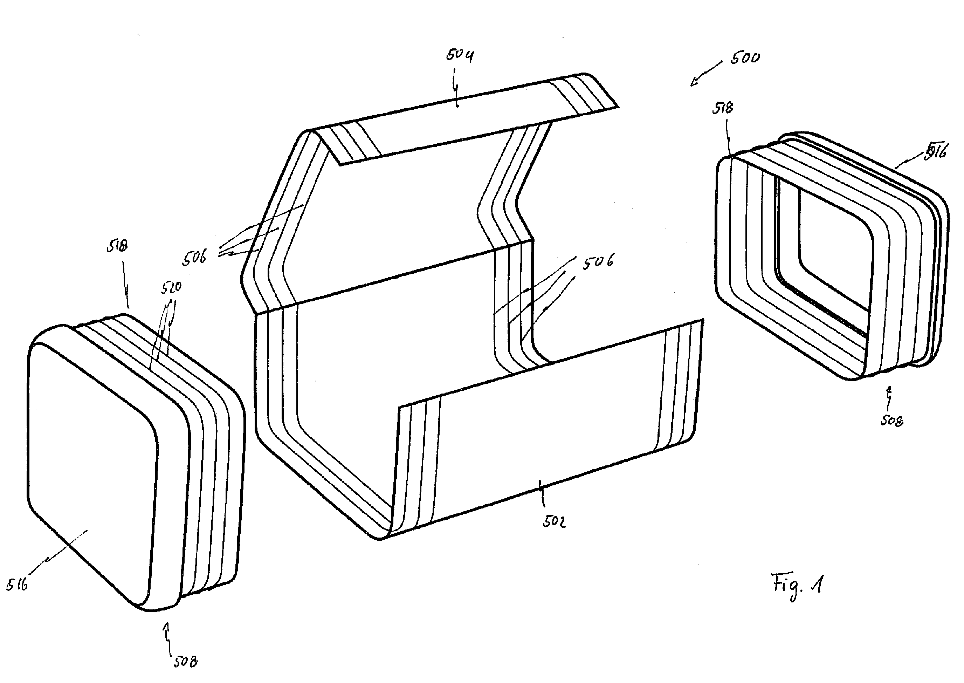

Gemäß der Figuren 1 bis 4 hat die Transportbox 500 gemäß dem ersten bevorzugten Ausführungsbeispiel der Erfindung einen vorliegend rinnenförmigen Aufnahmekörper 502 von im Querschnitt im wesentlichen rechteckiger Gestalt, an dessen einer Längskante ein ebenfalls rinnenförmiger Deckel 504 schwenkbar anscharniert ist. Der Deckel 504 sowie der Aufnahmekörper 502 haben im Wesentlichen die gleiche Länge und sind an ihren freien Längskanten mit zusammen wirkenden Schließmechanismen (nicht weiter dargestellt, da Stand der Technik) versehen, um den Deckel 504 in Schließposition verriegeln zu können. An den sich gegenüberliegenden Stirnseiten des Aufnahmekörpers 502 und ggf. des Deckels 504 sind deren Rinnenform offen. Alternativ hierzu könnte aber auch eine Stirnseite von Aufnahmekörper 502 und ggf. Deckel 504 mit einer feststehenden Wand verschlossen sein, sodass die Rinnenform nur an einer Stirnseite offen ist.

An zumindest einem stirnseitigen Endabschnitt des Aufnahmekörpers 502 und/oder des Deckels 504, vorzugsweise an beiden stirnseitigen Endabschnitten von Aufnahmekörper 502 und/oder Deckel 504 sind an der Innenseite des Aufnahmekörpers und/oder des Deckels eine Anzahl von in Längsrichtung des Aufnahmekörpers/Deckels beabstandete Hinterschneidungen 506, vorzugsweise in Form umlaufender Rillen oder Kanten ausgebildet. Diese bilden definierte Rastpositionen für Verschlusskappen 508, wie es nachfolgend noch näher beschrieben wird.

Die zumindest eine Stirnseite und insbesondere beide Stirnseiten des Aufnahmekörpers 502 und/oder Deckels 504 sind mittels jeweils einer Verschlusskappe 508 verschließbar. Diese besteht aus einer Stirnwand 516, an der ein hohler Zylinderstutzen 518 senkrecht zur Stirnwand 516 vorragt und dessen äußere Form und Dimension vorzugsweise der Innenwand des Aufnahmekörpers 502 und/oder des Deckels 504, zumindest jedoch der Form der stirnseitigen Öffnung im Aufnahmekörper/Deckel angeglichen ist. Auch der Zylinderstutzen 518 ist an seinem Außenumfang mit vorzugsweise umlaufenden Rillen oder Kanten 520 ausgebildet, die mit den Rillen/Kanten 506 am Aufnahmekörper und/oder Deckel in Formschluss (bzw. Rasteingriff) bringbar sind.

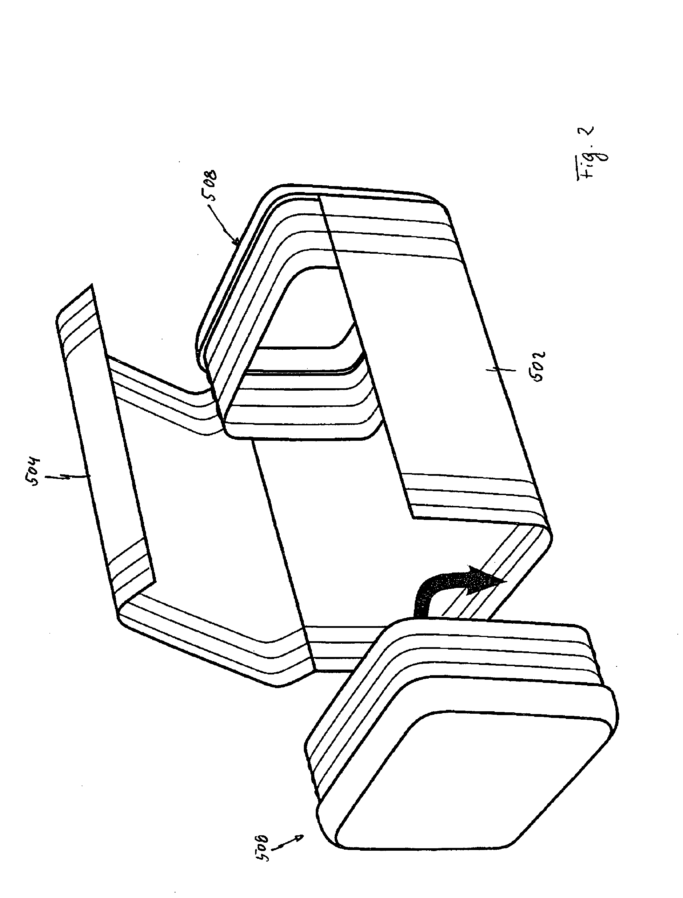

Wie insbesondere aus der Fig. 2 zu entnehmen ist, muss zur Längeneinstellung der Transportbox 500 gemäß dem ersten bevorzugten Ausführungsbeispiel der Erfindung der Deckel 504 geöffnet werden, wodurch die vorliegend beiden Verschlusskappen 508 aus den stirnseitigen Öffnungen (nach oben) entnommen werden können. Damit lösen sich die Rillen/Kanten voneinander, sodass die beiden Verschlusskappen 508 in Längsrichtung des Aufnahmekörpers 502 verschoben werden können. Hierdurch ändert sich die aktive Länge der Transportbox 500 vorzugsweise in den Schritten 140cm-165cm-190cm. Es können aber auch andere Schrittlängen sowie eine kontinuierliche oder quasi-kontinuierliche Verstellung beispielsweise durch Ausbildung einer Querriefelung vorgesehen sein.

Sobald die beiden Verschlusskappen 508 in der richtigen Position eingesetzt sind, werden diese (von oben) in die Rinnenform des Aufnahmekörpers 502 gedrückt, wodurch die Rillen/Kanten miteinander verrasten. Durch Verschließen des Deckels 504 werden schließlich die Verschlusskappen 508 in ihrer Position fest verriegelt.

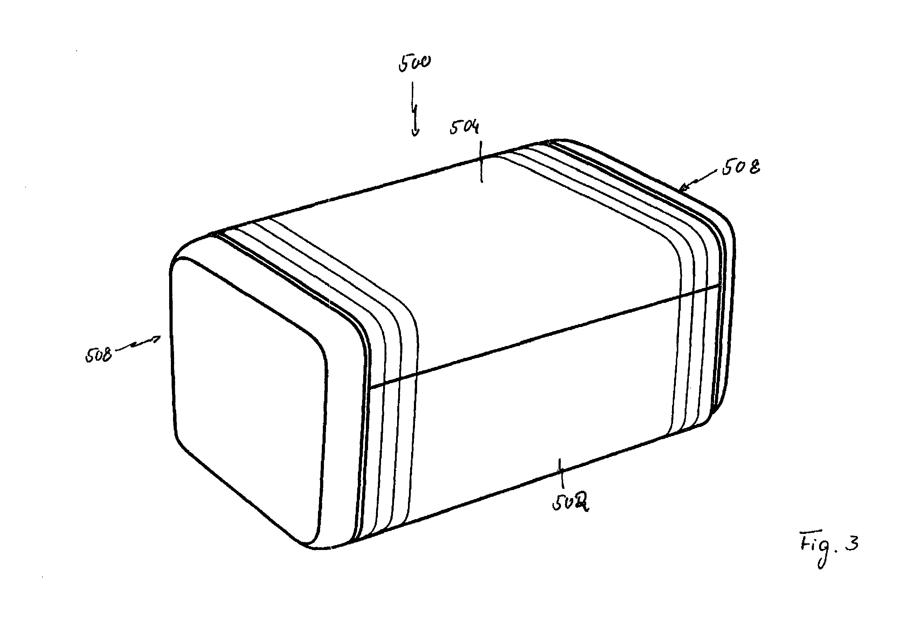

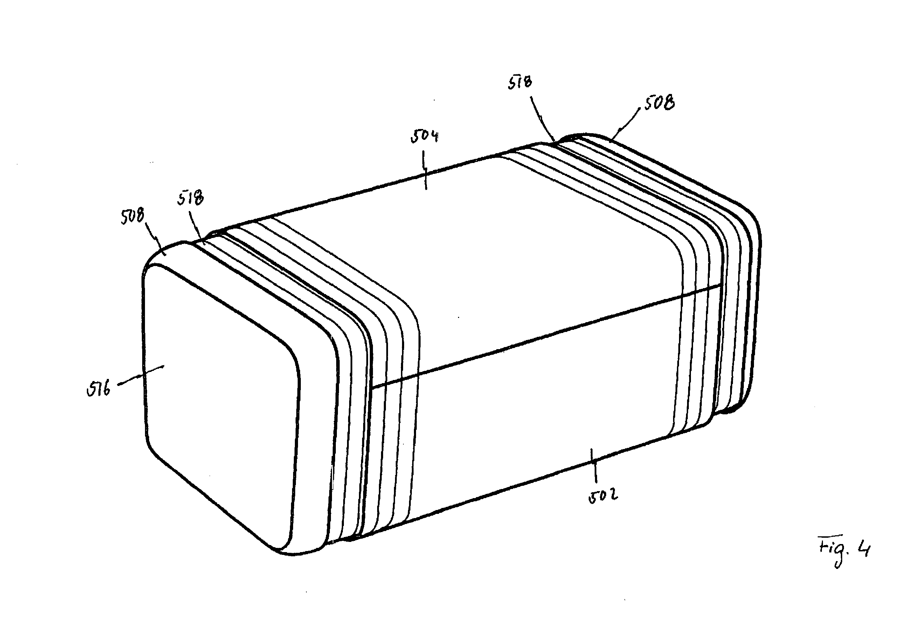

Die Fig. 3 und 4 zeigen die Transportbox 500 gemäß dem ersten bevorzugten Ausführungsbeispiel in maximal eingefahrener und maximal ausgefahrener Position der Verschlusskappen 508. Demzufolge können die Verschlusskappen 508 symmetrisch oder auch unsymmetrisch ausgefahren werden, um Zwischenschritte auszubilden. Es sind vorliegend drei Ausfahrpositionen für jede Verschlusskappe 508 vorgesehen, die in den Figuren als umlaufende Linien abgebildet sind und die sowohl am Hohlzylinder 518 der jeweiligen Verschlusskappe als auch an der Innenseite des Aufnahmekörpers/Deckels Hinterschneidungen/Kanten bilden. Alternativ ist es aber auch möglich, die stirnseitigen Öffnungen am Aufnahmekörper 502 umfänglich einzuengen, um hierdurch eine Rastkante (nicht gezeigt) auszubilden, die beispielsweise in Kerben an der jeweiligen Verschlusskappe eingreift. Auch ist in den Fig. 3 und 4 deutlich zu erkennen, dass die Abmessung des Deckels 504 unverändert bleibt, d.h. die Füllöffnung des Aufnahmekörpers 502 unabhängig ist vom Ausfahrgrad der Verschlusskappen 508.

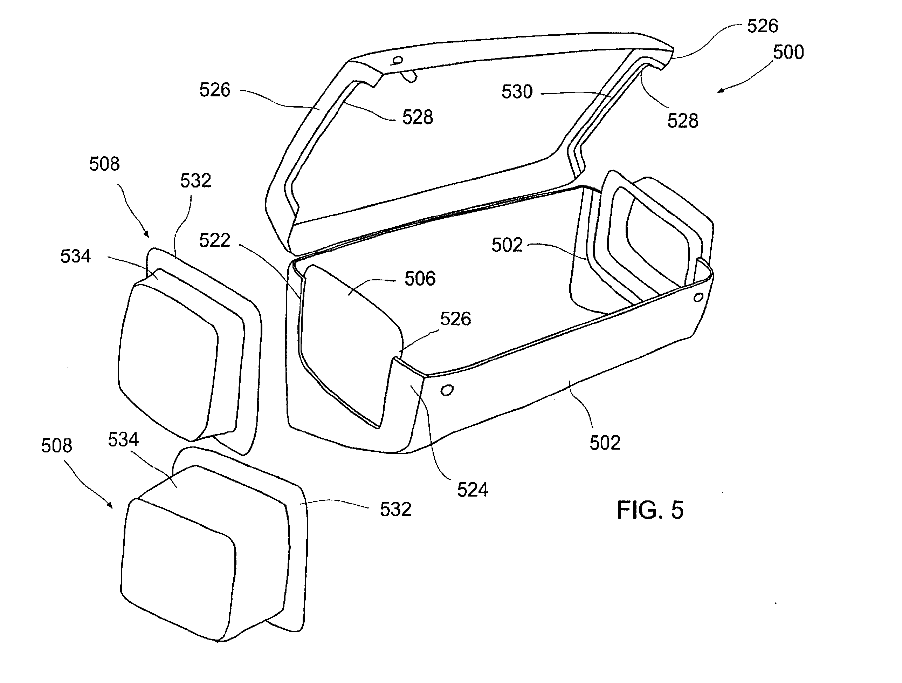

In der Fig. 5 ist eine Transportbox 500 gemäß einem zweiten Ausführungsbeispiel der Erfindung dargestellt, wobei gleiche Bauteile mit den gleichen Bezugszeichen versehen sind wie im ersten Ausführungsbeispiel.

Demzufolge besteht die Transportbox 500 ebenfalls aus dem Aufnahmekörper 502 sowie dem Deckel 504, der scharnierartig am Aufnahmekörper 502 angelenkt ist. Der Aufnahmekörper 502 hat ferner an zumindest einer, vorliegend an den beiden sich gegenüberliegenden Stirnseiten Öffnungen bzw. vorzugsweise rechteckförmige Einkerbungen 522 zur Schaffung der Öffnungen, die einen U-förmig umlaufenden Kragen 524 definieren, der eine Reststirnwand der Aufnahmekörpers 502 bildet. In dem Kragen 524 ist eine Nut 526 ausgeformt, welche die rechteckige Öffnung 522 umgibt und welche sich radial einwärts öffnet. Hierdurch wird quasi ein Einschubschacht gebildet, in den über die Füllöffnung des Aufnahmekörpers 502 aus, d.h. bei geöffnetem Deckel 504 eine Verschlusskappe 508 einsteck- bzw. einschiebbar ist.

Auch der Deckel 504 weist an seinen beiden gegenüberliegenden Stirnseiten Abschlusswände 526 auf, die recheckförmige (U-förmige) Einkerbungen/Ausbrüche 528 haben, etwa von der Breite der Aufnahmekörper-seitigen Ausbrüche 522, und die ebenfalls von einer Nut 530 umgeben sind mit radial ausgerichteter Nutenöffnung. D.h., dass bei geschlossenem Deckel 504 an beiden Stirnseiten des Aufnahmekörpers 502 eine Öffnung entsteht, die von einer geschlossen umlaufenden Nut umgeben ist.

Wie ferner aus der Fig. 5 zu entnehmen ist, sind eine Anzahl von Verschlusskappen 508 vorgesehen mit jeweils unterschiedlicher Kappentiefe, bestehend aus einem ringscheibenförmigen Kragen 532, von dem sich ein becherförmiger Hohlzylinderstumpf 534 senkrecht erstreckt. Dabei sind vorliegend mindestens zwei oder mehrere, vorzugsweise drei Verschlusskappengrößen vorgesehen mit unterschiedlich langen Hohlzylinderstümpfen 534, die beliebig, d.h. vorzugsweise in Abhängigkeit des vorgesehenen Transportguts an ihren jeweiligen Krägen 532 in die Nuten 522 eingesteckt werden können.

Im Konkreten wird für diesen Vorgang lediglich der Deckel 504 geöffnet, um so einen freien Zugang in die umlaufende Nut zu schaffen. Dann wird die jeweils ausgewählte Verschlusskappe 508 (von oben) über die Füllöffnung in die umlaufende Nut 522 eingesteckt und wie ein Riegel nach unter geschoben, solange, bis der Kragen 532 vollständig in der Nut 522 platziert ist. Wird nunmehr der Deckel 504 wieder geschlossen, wird die im Deckel 504 angeordnete Nut 530 über den oberen Rand des Kragens 532 gezogen, sodass nunmehr der Kragen 532 in der geschlossen umlaufenden Nut eingesetzt ist. Ein Herausdrücken der Verschlusskappe 508 aus dieser Verankerung ist somit nicht mehr möglich.

Im Nachfolgenden werden unterschiedliche Konstruktionen für ein Hecktragesystem gegeben, auf welchem die erfindungsgemäße Transportbox angeordnet werden kann.

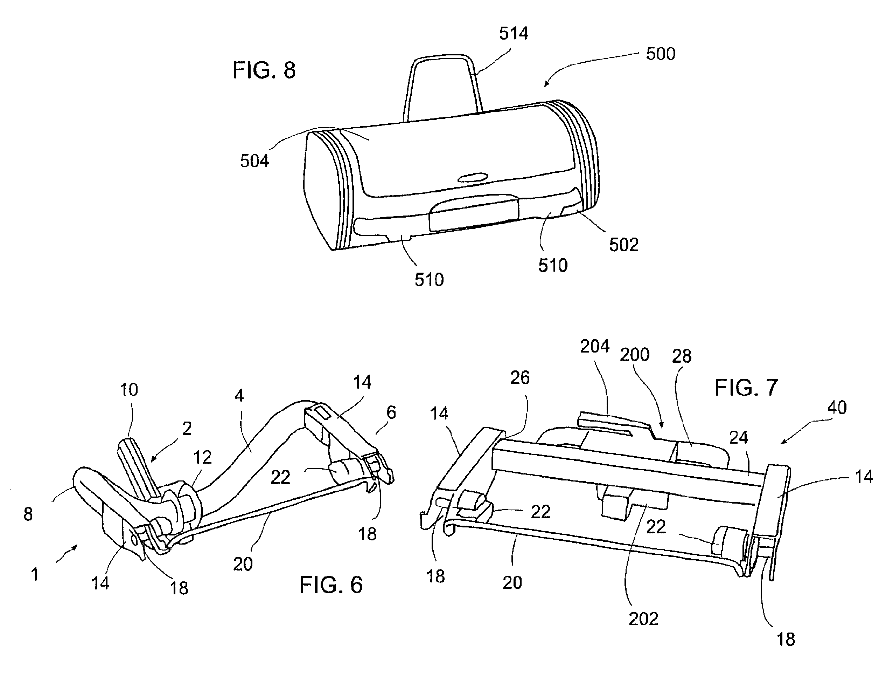

Das in der Fig. 6 dargestellte Grundgestell 1 ist nach dem Prinzip eines fahrzeugspezifischen, das heißt individuell gefertigten Rahmens ausgebildet und mit einer fahrzeugspezifischen Kupplung 2 ausgerüstet. Im Einzelnen besteht das Grundgestell 1 aus einem im Wesentlichen U-förmig geformten/gebogenen Stahl- oder Aluminiumrohr 4, das im Bereich seines U-Krümmungsabschnitts in einer Richtung senkrecht zur U-Form zusätzlich abgewinkelt ist. Insoweit entsteht ein U-förmiges, im dreidimensionalen Raum geweihartiges Rahmenprofil, wobei die beiden freien Endabschnitte 6, 8 des Rahmens 4 parallel zueinander sowie gerade auslaufen.

In einem Mittenabschnitt des Grundgestells 1 (im Bereich des U-Krümmungsabschnitts) ist die fahrzeugspezifische Kupplung 2 zur Montage des Grundgestells 1 an einem Fahrzeugheck eines nicht weiter dargestellten Kraftfahrzeuges angeordnet. Im Konkreten besteht die fahrzeugspezifische Kupplung gemäß der Erfindung aus einem Rohrstutzen 10 (kann auch ein Vollprofil sein), der über Befestigungsschellen 12 am Stahlrohrrahmen 4 des Grundgestells 1 angeklemmt ist. Auf diese Weise kann die räumliche Ausrichtung des Rohrstutzens 10 bezüglich des Grundgestells 1 justiert werden. Des Weiteren weist der Rohrstutzen 10 eine nicht weiter dargestellte Rasteinrichtung beispielsweise in Form einer Hinterschneidung auf, die mit einem kraftfahrzeugeigenen nicht weiter dargestellten Aufnahmeelement einer abnehmbaren Anhängerkupplung in Rasteingriff bringbar ist.

An dieser Stelle sei darauf hingewiesen, dass das individuell gestaltete Aufnahmeelement auf Seiten des Fahrzeugs nur im günstigen Fall das einer abnehmbaren Anhängerkupplung ist. Es kann aber auch ein am Fahrzeugrahmen des Kraftfahrzeugs befestigtes oder ausgebildetes, speziell für den Fahrzeugheckträger entwickeltes Aufnahmeelement sein, das unabhängig zur fahrzeugeigenen Anhängerkupplung vorgesehen ist. Es können beispielsweise auch zwei in Fahrtrichtung gesehen querbeabstandete Aufnahmen sein, in die zwei Rohrstutzen eingeschoben werden. Diese Alternative soll zeigen, dass eine beliebige Anzahl von Individuallösungen für eine fahrzeugspezifische Kupplung denkbar ist die jedoch aufgrund ihres Aufbaus oder ihrer Form einem bestimmten Fahrzeugmodell oder Fahrzeugbaureihe zugeordnet werden kann.

Vorzugsweise ist die fahrzeugspezifisch ausgebildete Kupplung 2 gemäß der Fig. 6 so ausgebildet, dass sie in die Aufnahmeeinrichtung einer aus dem Stand der Technik allgemein bekannten abnehmbaren Anhängerkupplung eines Kraftfahrzeugs einsteckbar ist. Da derartige abnehmbare Anhängerkupplungen individuell beziehungsweise fahrzeugsspezifisch ausgebildet sind, ist auch die vorliegende Kupplung 2 gemäß der Fig. 6 entsprechend dieser individuellen Ausbildung eines Kupplungshalses zumindest im Aufnahmeabschnitt nachempfunden.

Die beiden Endabschnitte 6, 8 des das Grundgestell 1 ausbildenden Basisrahmens 4 sind jeweils mit einem Montageadapter 14 für ein Transportgutauflager (gemäß nachstehender Beschreibung) bestückt. Im vorliegenden Fall ist jeder Montageadapter 14 aus einem rinnen- bzw. U-förmig gebogenen Stahlblech ausgeformt, welches auf die Endabschnitte 6, 8 des Basisrahmens aufgesetzt (aufgesattelt) und verschraubt ist.

An jedem U-förmig gebogenen Stahlblech 14 sind Lagerbolzen 16 vorsehen, an denen Einhakelemente 18, beispielsweise verschwenkbaren Klauen angeordnet sind. Diese Einhakelemente 18 sind mit einer gemeinsamen Handhabe (Betätigungsstange) 20 miteinander verbunden, über die die Einhakelemente 18 gemeinsam in eine Rast-und/odereine Freigabeposition verschwenkbar sind. Des Weiteren ist jedes U-förmige Stahlblech 14 mit Hinterschneidungen, beispielsweise mit Ausnehmungen ausgebildet, die zumindest einen weiteren Anlenktpunkt zur förmschlüssigen Verbindung mit einem Transportgutauflager darstellen und die als Widerlager für die Hakenelemente 18 dienen. Schließlich ist vorzugsweise jeder Montageadapter 14 mit einem Verriegelungselement 22, beispielsweise einem Schloss mit Sperrbolzen versehen, mit welchem die Einhakelemente 18 zumindest in der Verriegelungsposition sperrbar sind.

Die Verschraubung der Montageadapter 14 an den freien Endabschnitten 6, 8 des Rohrrahmens 4 ist vorliegend so ausgeführt, dass die Montageadapter 14 bezüglich der freien Endabschnitt 6, 8 verschwenkt, bzw. umgeklappt werden können. Beispielsweise ist jeder Montageadapter 14 über einen Schenkbolzen am freien (vorderen) Ende des zugehörigen Endabschnitts 6, 8 an diesem anscharniert und über Haltesplinte am hinteren Ende (Übergangsbereich zum U-Krümmungsabschnitt des Rohrrahmens 4) gesichert. Es können aber auch andere Schwenkmechanismen vorgesehen sein, die ein Umklappen des Montageadapters 14 in Richtung freies Ende der Endabschnitte 6, 8 ermöglichen. Auch ist es denkbar, den Klappmechanismus mittels des vorstehend beschriebenen Verriegelungselements 22 ebenfalls zu sperren und/oder freizugeben.

Das in der Fig. 7 dargestellte Grundgestell 1 ist im Gegensatz zu dem Grundgestell 1 gemäß der Fig. 6 nunmehr nach dem Prinzip eines universalen Basisrahmens 40 ausgeformt. In diesem Fall besteht das Grundgestell 1 aus einer Traverse 24 (Querstange aus einem Vierkantprofil), an deren sich gegenüberliegenden Enden jeweils ein Montageadapter 14 jeweils in einem rechten Winkel zur Traverse 24 (d.h. in Fahrzeuglängsrichtung ausgerichtet) aufgesteckt und/oder daran angeschweißt ist. Der Aufbau der beiden Montageadapter 14 entspricht dabei im Wesentlichen dem Montageadapter 14, welcher an dem Grundgestell 1 des ersten Ausführungsbeispiels montiert ist. Daher kann an dieser Stelle auf die vorstehende Beschreibung verwiesen werden.

Der wesentliche Unterschied des Montageadapters 14 gemäß dem zweiten Ausführungsbeispiel gegenüber dem Montageadapter 14 des ersten Ausführungsbeispiels besteht indessen in der Befestigungsmöglichkeit des Montageadapters 14 am Basisrahmen 40. Während gemäß dem ersten Ausführungsbeispiel jeder Montageadapter 14 auf die Endabschnitte 6, 8 des Basisrahmens 4 aufgeschoben (aufgesattelt) und daran verschraubt/verbolzt ist, ist jeder Montageadapter 14 gemäß dem zweiten bevorzugten Ausführungsbeispiel mit einem Durchgangsloch 26 versehen, in welches die Traverse 24 endseitig eingesteckt und daran verschweißt ist. Insofern repräsentieren die Montageadapter 14 gemäß dem zweiten Ausführungsbeispiel gleichzeitig auch die tragenden Endabschnitte 6, 8 des Grundrahmens 4 gemäß dem ersten Ausführungsbeispiel. Des weiteren ist die Befestigung der Montageadapter 14 gemäß dem zweiten Ausführungsbeispiel nicht dazu geeignet, die Montageadapter 14 bezüglich der Traverse 24 verschenken zu können.

Des Weiteren ist an der Traverse 24 ein Bügelrahmen 28 mittig angeschweißt, um eine Aufnahmemöglichkeit für eine Universalkupplung 200 zu bilden. Im Konkreten umschließt der Bügelrahmen 28 zusammen mit der Traverse 24 einen Aufnahmebereich, in den die Universalkupplung 200 eingesetzt und darin am Universalrahmen 40 verschraubt ist. Die Universalkupplung 200 besteht dabei aus einem Gehäuse 202, in welchem eine Lagerhalbschale (nicht gezeigt) fest eingebaut ist. Gegenüber dieser fest eingebauten Lagerhalbschale ist eine weitere Lagerhalbschale (ebenfalls nicht dargestellt) scharnierartig im Gehäuse 202 montiert, die zusammen mit der fest eingebauten Lagerschale eine Kugelaufnahme für eine Fahrzeuganhängerkupplung ausbildet. Am Gehäuse 202 ist ferner ein Betätigungshebel 204 gelagert, über den eine nicht gezeigte, im Gehäuse 202 untergebrachte Vorspanneinrichtung betätigbar ist, über die auf die scharnierartig gelagerte Halbkugellagerschale eine Vorspannkraft in Richtung auf die fest installierte Halbkugellagerschale aufbringbar ist, um eine vorbestimmte Einspannkraft auf einen dazwischen eingeklemmten Kugelkopf der fahrzeugseitigen Anhängerkupplung aufzubringen. Eine derartige Universalkupplung 200 ist bereits aus dem Stand der Technik insbesondere auch im Rahmen einer Vielzahl von Veröffentlichungen der Anmelderin selbst bekannt, sodass an dieser Stelle auf eine weitere detaillierte Beschreibung der verwendeten, allgemein bekannten Universalkupplung 200 sowie deren Funktion verzichtet werden kann.

In der Fig. 8 ist beispielhaft ein Transportgutauflager in Form einer verschließbaren Gepäck- oder Transportbox 500 dargestellt, wie sie vorstehend anhand der Fig. 1 bis 5 beschrieben ist. Diese kann entweder selbsttragend oder auf einem Gitterrohrrahmen (nicht gezeigt) montiert sein und hat den kistenartigen Grund- bzw. Aufnahmekörper 502, der mit dem vorzugsweise abschließbaren Deckel 504 verschließbar ist. Im Grund- bzw. Aufnahmekörper 502 ist ferner eine Beleuchtungseinheit 510 integriert. Vorzugsweise sind an der Gepäckbox 500 bzw. am Gitterrohrrahmen Rollen (nicht gezeigt) sowie ein Haltebügel 514 angeordnet, um die Gepäckbox 500 nach Abnehmen von dem Grundgestell 1 verfahren zu können.

## Patentansprüche

1. Transportbox zur Montage an einem Kraftfahrzeug mit einem Transportgut-Aufnahmekörper (502), der an zumindest einer Seite mit einem Deckel (504) öffen- und schließbar ist, wobei zumindest eine Stirnseite des Aufnahmekörpers (502) durch eine externe Kappe (508) verschlossen ist, deren Seitenendplatte (516) in Stirnseitenrichtung des Aufnahmekörpers (502) auf unterschiedliche Abstände zum Aufnahmekörper (502) für ein Variieren des Stauvolumens wählbar ist, **dadurch gekennzeichnet, dass** an der offenen Stirnseite des Aufnahmekörpers (502) ein Befestigungsmittel (522) zur lösbaren Befestigung der Kappe (508) zum Verschließen der Stirnseite ausgebildet ist, wobei an der offenen Stirnseite eine aus einer Mehrzahl von Kappen (502) mit unterschiedlicher Kappentiefe auswählbare oder ausgewählte Kappe über das Befestigungsmittel (522) montiert ist, und
mit Schließen des Deckels (504) die Kappe (508) am Transportgut-Aufnahmekörper (502) verriegelt.

2. Transportbox nach Anspruch 1, **dadurch gekennzeichnet, dass** das Befestigungsmittel (522) eine um die offene Stirnseite sich erstreckende Nut ist und die Kappe (508) mit einem umlaufenden Kragen (532) ausgebildet ist, der in die Nut (522) dichtend einsteckbar ist.

3. Transportbox nach Anspruch 2, **dadurch gekennzeichnet, dass** die Stirnseiten des Deckels (504) mit einem Ausbruch (528) versehen sind, der von einer Nut (530) umgeben ist, die im geschlossenen Zustand des Deckels (504) eine geschlossene umlaufende Nut zusammen mit der Nut (522) im Aufnahmekörper (502) bildet.

## Claims

1. A transport box for mounting on a motor vehicle, having a cargo-receiving body (502) which is openable and closable at at least one side by a lid (504), at least one end of the receiving body (502) being closed by an external cap (508) whose side end plate (516) is selectable to be at different distances from the receiving body (502) in the direction of the end of the receiving body (502) for varying the stowing volume, **characterised in that** a securing means (522) for detachably securing the cap (508) to close the end is formed at the open end of the receiving body (502), a cap selected or selectable from a plurality of caps (502) having differing cap depths being mounted at the open end by way of the securing means (522), and
on closing of the lid (504) locks the cap (508) to the cargo-receiving body (502).

2. A transport box according to claim 1, **characterised in that** the securing means (522) is a groove extending around the open end and the cap (508) is constructed to have an all-round collar (532) which may be sealingly inserted into the groove (522).

3. A transport box according to claim 2, **characterised in that** the end faces of the lid (504) are provided with a cut-out (528) surrounded by a groove (530) which, in the closed state of the lid (504), forms a closed all-round groove together with the groove (522) in the receiving body (502).

## Revendications

1. Caisse de transport pour le montage sur un véhicule automobile avec un corps de réception de produit de transport (502) qui peut être ouvert et fermé sur au moins un côté par un couvercle (504), sachant qu'au moins un côté frontal du corps de réception (502) est fermé par un cache externe (508), dont différents écartements de la plaque d'extrémité latérale (516) par rapport au corps de réception (502) peuvent être choisis dans le sens latéral frontal du corps de réception (502) pour une variation du volume de stockage, **caractérisée en ce qu'**un moyen de fixation (522) pour la fixation amovible du cache (508) est réalisé sur le côté frontal ouvert du corps de réception (502) pour la fermeture du côté frontal, sachant qu'un cache sélectionné ou pouvant être sélectionné parmi une pluralité de caches (502) avec une profondeur différente est monté sur le moyen de fixation (522) sur le côté frontal ouvert, et
verrouille le cache (508) en fermant le couvercle (504) sur le corps de réception de produit de transport (502).

2. Caisse de transport selon la revendication 1, **caractérisée en ce que** le moyen de fixation (522) est une rainure s'étendant autour du côté frontal ouvert et le cache (508) est réalisé avec un collet tournant (532) qui peut être inséré de manière étanche dans la rainure (522) .

3. Caisse de transport selon la revendication 2, **caractérisée en ce que** les côtés frontaux du couvercle (504) sont pourvus d'un percement (528) entouré d'une rainure (530) qui forme à l'état fermé du couvercle (504) une rainure tournante fermée conjointement avec la rainure (522) dans le corps de réception (502).
